# EUROPEAN PATENT APPLICATION

(11) **EP 4 749 358 A1**
(43) Date of publication of application: **27.05.2026**
(21) Application number: 24215365.8
(22) Date of filing: 26.11.2024
(51) Int. Cl.: G02F 1/167

(54) **LIGHT MODULATOR WITH STRUCTURING AGENT LIMITING DIFFUSION OF PIGMENT PARTICLES**

(71) Applicant: eLstar Dynamics Patents B.V., 3235 CD Rockanje (NL)
(72) Inventor: GUO, Ying, 4125 Basel (CH); LOXLEY, Andrew, Philadelphia, 19106 (US); MASSARD, Romaric Mathieu, 5651 GW Eindhoven (NL)
(74) Representative: DeltaPatents B.V.

(57) **Abstract**

Some embodiments are directed to a light modulator having a first substrate and a second substrate, the first and second substrates being arranged with inner sides opposite to each other, at least one electrode being applied to the inner side of the first substrate, an optical layer between the first and second substrates. The optical layer contains a fluid ink comprising pigment particles and a structuring agent, wherein the pigment particles are electrically charged or chargeable. Upon application of an electric potential, to generate an electric field in the optical layer providing electrophoretic or dielectrophoretic movement of the pigment particles causing modulation of optical properties of the light modulator. The structuring agent limits the diffusion of the pigment particles in the ink in at least part of the optical layer and at least when the optical layer is in a particular optical state.

## Description

### TECHNICAL FIELD

The presently disclosed subject matter relates to a light modulator, a method for a light modulator, and a method for manufacturing a light modulator.

### BACKGROUND

A known light modulator is disclosed in WO2022023180, included herein by reference. The known light modulator comprises transparent or reflective substrates, and an optical layer extending between the substrates, the optical layer comprising a fluid comprising particles. Multiple electrodes are applied to the substrates in a pattern across the substrate. A controller may apply an electric potential to the electrodes to obtain an electric field between the electrodes providing electrophoretic movement of the particles towards or from an electrode.

As the position of particles is modulated in the optical layer, the optical properties of the light modulator also change. For example, if the particles are spread out across the optical layer, the light modulator will be less transparent. On the other hand, if the particles are concentrated in a small volume, ideally hidden behind the electrodes, although this is not strictly necessary, the transparency of the light modulator increases.

Unfortunately, if no countermeasures are taken, once a desirable modulation of the local particle concentrations is reached, and a corresponding desirable optical state, the concentration distribution will tend to disperse under the natural influence of particle diffusion in the optical layer. In the known light modulator, this problem is addressed by periodically re-establishing the desired concentration distribution. This solution, however, implies frequent use of electric power. There is a desire to maintain a particular optical state for a longer duration using passive means.

### SUMMARY

There is a wish to improve the bistability of light modulators, e.g., the ability of the light modulators to rest in both a more transparent state as well as in a more opaque state, also referred to as non-volatility.

An embodiment of a light modulator comprises an optical layer between a first substrate and a second substrate. At least one electrode is applied to the inner side of the first substrate to allow electrophoretic or dielectrophoretic movement of pigment particles in the optical layer, causing modulation of optical properties of the light modulator.

Interestingly, the optical layer further comprises a structuring agent that limits the diffusion of the pigment particles in the ink in at least part of the optical layer and at least when the optical layer is in a particular optical state.

As a result it will take longer for pigment particles to move in the part of the optical layer with reduced diffusion, or to enter or leave the part. The optical effects of a concentration difference in the part, or between the part and outside of the part, will thus be maintained longer.

Various structuring agents can be used in the light modulator. For example, the structuring agent may comprise a gelling agent, a thickening agent, and/or a rheology modifier.

For example, the diffusion of the pigment particles is reduced in a first region of the optical layer compared to a second region of the optical layer. Such local differences in diffusion may be obtained by obtaining a different concentration of the structuring agent across the optical layer. Various mechanisms to manipulate particles may be applied to structuring agent particles to affect local differences in structuring agent particle concentration. For example, the structuring agent may cause a local increase in viscosity in parts of the optical layer where a local concentration of the structuring agent exceeds a threshold. In particular, a critical structuring agent may be used where the increase in viscosity is superlinear when a critical concentration threshold is exceeded.

A superlinear increase in viscosity implies that the rate of increase in viscosity grows faster than a linear function of the concentration of the structuring agent. For example, if the viscosity growth rate increases after the concentration of the structuring agent exceeds the threshold, rather than the growth increasing at a constant rate, the growth is superlinear.

A further aspect includes dynamic glazing comprising an embodiment of the light modulator.

Further aspects include a light modulator method and a light modulator manufacturing method. An embodiment of the method or parts thereof may be implemented on a computer as a computer-implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer-readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer-readable medium.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a building block,
Figure 1b schematically shows an example of an embodiment of a substrate,
Figures 2a-2e schematically show an example of an embodiment of a substrate,
Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5a schematically shows an example of an embodiment of a light modulator,
Figure 5b schematically shows an example of an embodiment of a light modulator,
Figure 6a schematically shows an example of an embodiment of a light modulator,
Figure 6b schematically shows an example of an embodiment of a light modulator substrate,
Figure 6c schematically shows an example of an embodiment of a light modulator,
Figure 6d schematically shows an example of an embodiment of a light modulator,
Figure 7a schematically shows an example of an embodiment of a light modulator,
Figure 7b schematically shows an example of an embodiment of a structuring agent,
Figure 7c schematically shows an example of an embodiment of a high-viscosity region,
Figure 8a schematically shows an example of an embodiment of a light modulator,
Figure 8b schematically shows an example of an embodiment of a light modulator,
Figure 9a schematically shows an example of an embodiment of a light modulator,
Figure 9b schematically shows an example of an embodiment of a light modulator,
Figure 9c schematically shows an example of an embodiment of a light modulator,
Figure 10a schematically shows an example of an embodiment of a light modulator method,
Figure 10b schematically shows an example of an embodiment of a method for manufacturing a light modulator,

### Reference signs list

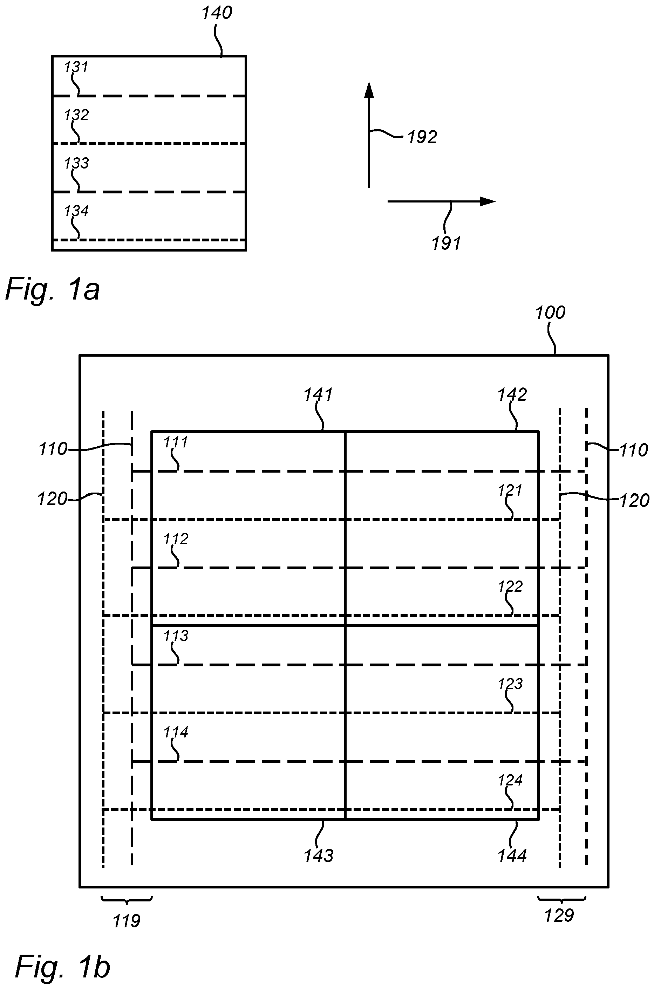

The following list of references and abbreviations corresponds to figures 1-9c, and is provided for facilitating the interpretation of the drawings and shall not be construed as limiting the claims.
- 10: a light modulator
- 11: a first substrate
- 12: a second substrate
- 13, 13a, 13b: electrodes
- 14, 14a, 14b: electrodes
- 15: a fluid
- 16: a controller
- 17: an optical layer
- 30: particles
- 20: a car
- 21: a light modulator
- 40: a light modulator
- 41: a first substrate
- 42: a second substrate
- 43: a third substrate
- 46: a controller

- 100: a substrate
- 111-114: a main line
- 121-124: a main line
- 131-134: interdigitated electrodes
- 140: a building block
- 141-144: a building block
- 110, 120: a driving bus
- 119, 129: a connecting zone
- 191, 192: a direction

- 500, 505, 506: a light modulator
- 511,512: a substrate
- 517: an optical layer
- 531, 532: a pigment particle
- 501, 503: a high-viscosity region
- 502, 504: a low-viscosity region
- 54, 55: an electrode
- 551, 541: a main electrode line
- 542-544: an electrode line
- 552-554: an electrode line

- 701: a high-viscosity region
- 711, 712, 721, 722: an electrode
- 730: a pigment particle
- 740: a structuring agent,
- 75: an electrode
- 704: a high-viscosity region
- 705: a low-viscosity region

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

Figures 1a- 4c provide various examples of the electrode system on the first and second substrate and how they may be implemented or used in a light modulator. These examples may be provided with a structuring agent in the optical layer which limits diffusion of the pigment particles in all or part of the optical layer, at least when the optical layer is in a particular optical state.

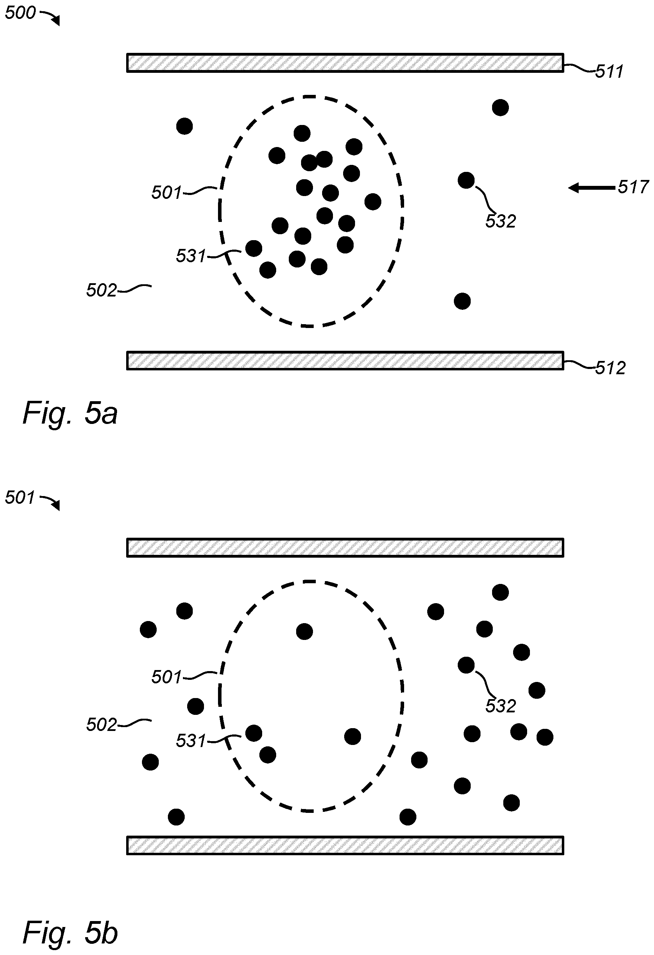

The figure 1a-4c and corresponding text focus on light modulator technology, while starting from figure 5, the structuring agent is further expanded upon.

Many of the known light modulators may be provided with a structuring agent in the light modulator. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field, enabling electrophoretic control of particles.

Electrophoretic light modulators are explained more extensively herein and are used as the motivating example. In an embodiment, a light modulator comprises a first substrate and a second substrate. The optical layer between them may be according to an embodiment, e.g., having a structuring agent limiting diffusion in all or part of the optical layer. For example, the first and second substrates may be arranged with inner sides opposite to each other, using a substrate according to an embodiment. An optical layer is arranged between the first and second substrates. The electrode is arranged to modulate an electrical field in the optical layer. The optical layer comprises a fluid, e.g., liquid, comprising particles, wherein the particles are electrically charged or chargeable. The fluid may be a continuous fluid. The fluid may be arranged so that particles are free to flow throughout the optical layer.

The particles may be moved under control of the electrical field. For example, a controller may be configured to apply an electric potential to the electrode to obtain an electric field at the electrode, providing electrophoretic movement of the particles towards or from one of the at least one electrode, causing modulation of the optical properties of the light modulator. For example, optical properties may include a transition between a high-transparent state and a low-transparent state or vice versa. Note that a transition may also alter thermal properties of the light modulator.

Below, a number of known light modulators are reviewed, showing some of the options in technology and electrodes. These known substrates can advantageously be modified by adding a structuring agent limiting diffusion in all or part of the optical layer. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate.

US patent 10921678 with title `Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite the first substrate, with an accumulation electrode. The first substrate and the second substrate enclose a pixel with a fluid and particles. In use, an applied electric field to the field electrode and the accumulation electrode provides movement of the particles from the field electrode and the accumulation electrode and vice versa. Any of these cited electrophoretic or dielectrophoretic light modulators may be adapted by including a structuring agent limiting diffusion in all or part of the optical layer.

US patent 8054535B2 (included herein by reference) and US patent 8384659B2 (included herein by reference) show alternative examples of electrophoretic light modulators in which one of two substrates has two patterned electrodes.

Patterned electrodes are also used in dielectrophoretic light modulators. For example, US patent applications US2005185104A1 (included herein by reference) and US20180239211A1 (included herein by reference) show dielectrophoretic light modulators having a substrate with a patterned electrode. Any of these cited electrophoretic or dielectrophoretic light modulators may be adapted by including a structuring agent limiting diffusion in all or part of the optical layer.

The paper "Reversible Metal Electrodeposition Devices: An Emerging Approach to Effective Light Modulation and Thermal Management," included herein by reference, also shows a substrate on which a patterned electrode is applied. A structuring agent limiting diffusion in all or part of the optical layer may be included in its optical layer.

A substrate according to an embodiment can be beneficially applied in a number of other technologies. For example, the light modulator may be a dielectrophoretic light modulator, e.g., as shown in US20050185104 A1, included herein by reference. A structuring agent limiting diffusion in all or part of the optical layer may be included in its optical layer.

A substrate as in an embodiment may also be used in other electrowetting . In electrowetting one needs electrodes on only one of the substrates. An OLED layer may be combined with a light modulator as in an embodiment, in addition or instead. A micro-LED layer may be combined with a light modulator as in an embodiment, in addition or instead.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. A structuring agent limiting diffusion in all or part of the optical layer may be included in its optical layer.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. A structuring agent limiting diffusion in all or part of the optical layer may be included in its optical layer.

In an application of the light modulator for glazing, both substrates are typically transparent. In other applications, e.g., in television, e-readers, etc., only one substrate may be transparent.

**Figure 1b** schematically shows an example of an embodiment of a substrate. The substrate is in particular useful for use in a light modulator, e.g., of a kind described herein. Across the substrate an electrode system is applied in the form of multiple interdigitated electrodes. Shown in figure 1b are two interdigitated electrodes. The substrate may comprise a structuring agent limiting diffusion in all or part of the optical layer may be included in its optical layer.

A contact area may be arranged to enable electrical connection to at least the one or more driving electrodes applied on the substrate.

The motivating example use of the substrate is in an electrophoretic light modulator. Typically, an electrophoretic light modulator comprising at least two substrates, each having at least two electrodes at each of the substrates; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples including the dielectrophoretic effect and the electrophoretic effect. For example, optical modulation may comprise the modulation of particles arranged in the optical layer. The number of electrodes may range from one on a single substrate, to multiple electrodes on one or both substrates.

The optical layer arranged between the first and second substrates may comprise particles, e.g., suspended in a fluid. The controller may be configured to apply an electric potential to the electrodes causing the particles to move thus modulating the optical properties of the light modulator.

In an embodiment, the particles comprise electrically charged or chargeable particles, and the controller is configured to apply an electric potential to the electrode to obtain an electric field providing electrophoretic movement of the particles. In an embodiment, the electric field is arranged between at least two electrodes arranged on the same substrate or arranged on different substrates.

In an embodiment, the particles comprise dielectric particles, and the controller is configured to apply an electric potential to the electrode to apply an electric field gradient to the particles enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 1b are two electrodes on the same surface. The two electrodes are indicated in figure 1b in two different dashing styles. There could be more than two electrodes on the same side of the substrate, e.g., to facilitate more fine-grained control of voltage differences across the substrate. The electrodes are applied to a same side of the substrate. Applying electrodes to a substrate may be done lithographically, e.g., using a mask representing the electrodes pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes arranged at its inner surface. Though, as mentioned, multiple electrodes on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes, the second substrate may comprise one electrode. For example, the first substrate may comprise two electrodes, the second substrate may comprise two electrodes. For example, the first substrate may comprise more than two electrodes, the second substrate may comprise two or more electrodes.

Light modulators, wherein each substrate comprises two electrodes are used as a motivating example, though. Designs of substrates featuring two electrodes may be adapted to have a single electrode, e.g., by connecting the two electrodes, or by removing one of the electrodes. Adapting a substrate in such a manner may make it suitable for use in different technologies.

Each of the multiple electrodes are arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 1b the first electrode comprises main lines 111-114, and the second electrode comprises main lines 121-124. The electrodes are each driven by its driving bus. Figure 1b shows two driving buses: driving bus 110 and driving bus 120. The electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per electrode is not impossible, though having multiple is advantageous.

The driving buses may be adapted to form a contact area to enable electrical connection to at least the one or more driving electrodes applied on the first substrate, e.g., a connection from outside the light modulator. This is not necessary, and a separate contact area, e.g., additional to driving buses 110 and 120 may be provided as in an embodiment.

The multiple of main lines of the first and second electrode are arranged alternatingly with respect to each other on the substrate.

In this example, there are no other connections between the main lines of an electrode than through the common driving bus. In an embodiment, an electrode comprises a mesh electrode, that is, additional electrical connections may be added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 100 is in smart glazing, e.g., a light modulator, which may be applied in domestic housing, offices, green houses, cars, and the like. The level of transparency or reflectivity of the smart glazing can be adapted electrically. For example, in smart glazing two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides.

Interestingly, the pattern in which the electrodes stretch across the substrate may be created by multiple repeated building blocks. Shown in figure 1b, the electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the electrodes, e.g., form the multiple main lines of the electrodes. Note that the building blocks are typically connected in a substrate-electrode design tool. Typically, a building block comprises more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The electrodes that are formed by repeating building blocks are connected to the driving buses. Typically, electrode lines in a building block are connected to electrode lines in neighboring blocks by mering corresponding electrode lines; this is not necessary though, between repeated building blocks connection zones can be inserted that connect corresponding electrode lines.

This step can connect up multiple of the main lines together thus forming a single electrode. Figure 1b shows two connecting zones 119 and 129 in which the main lines belonging to the same electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first electrode or in the second electrode, e.g., as indicated in this case by the dashing style. This is, however, not necessarily the case. An electrode in a building block may end up as part of the first electrode or as part of the second electrode. This can change, e.g., as a result of the parity of the number of electrodes in the building block, the pattern in which the building blocks are repeated, etc.

For example, a particular pattern of repeated building blocks may be used for a light modulator with two electrodes, in which one might assign alternating main lines to the two electrodes. However, the same pattern of repeated building blocks may be used for a light modulator with three electrodes, in which one might assign every next set of three main lines to the three electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

The light modulator may comprise one or more spacers. Spacers are small structures placed around the substrate in the optical layer to keep the two substrates at a constant distance. A spacer may be a dielectric, e.g., formed from the same material as one of the substrates.

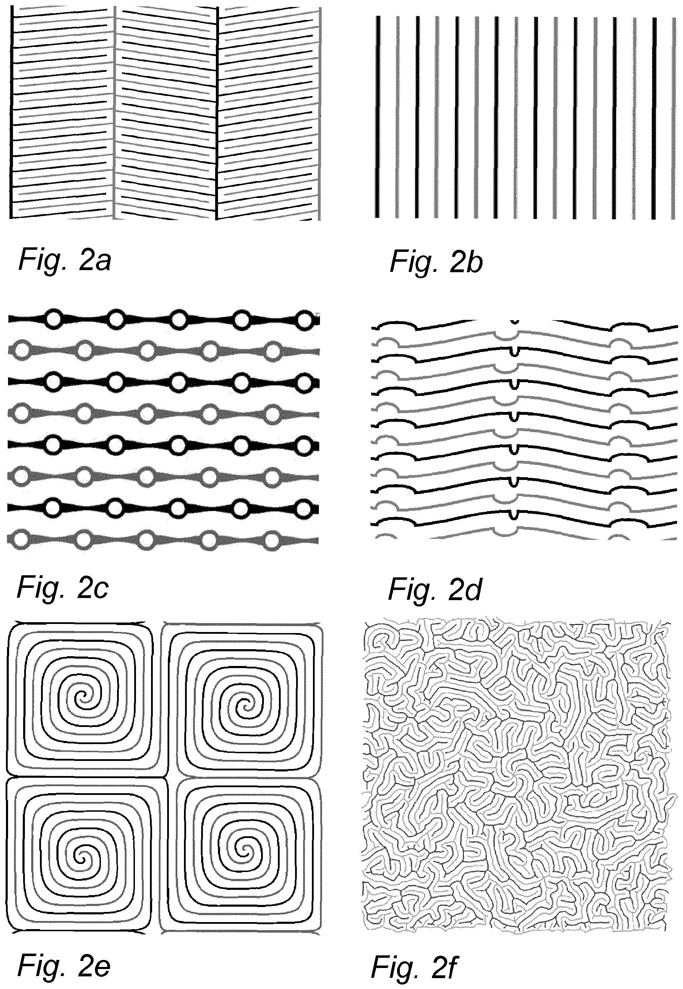

**Figures 2a-2f** schematically show examples of substrates with interdigitated electrodes. These may be embodied on a substrate with two electrodes, e.g., by alternatingly connected electrodes. Figures 2a-2d may also be embodied on a substrate with multiple electrodes, e.g., by connecting in sequences of 3 or 4 or more electrodes.

Figures 2e and 2f show designs with two electrodes on the surface of the substrate. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular if these designs are connected to two driving buses, no crossing electrodes are needed. When more than two electrodes are used, or if more complicated electrode patterns are used, then crossing of the electrodes may be used, or may even become necessary. Such crossings are possible however for example, at the location where two electrode lines cross a dielectric material may be arranged between the electrodes. For example, such an insulator may be deposited at the crossing location. For example, a first electrode is in a first plane of the substrate and a second electrode is in a second plane of the substrate.

Two substrates according to an embodiment may be combined to form a light modulator. The light modulator is particularly suited to glazing. An exemplary embodiment of a light modulator is shown below.

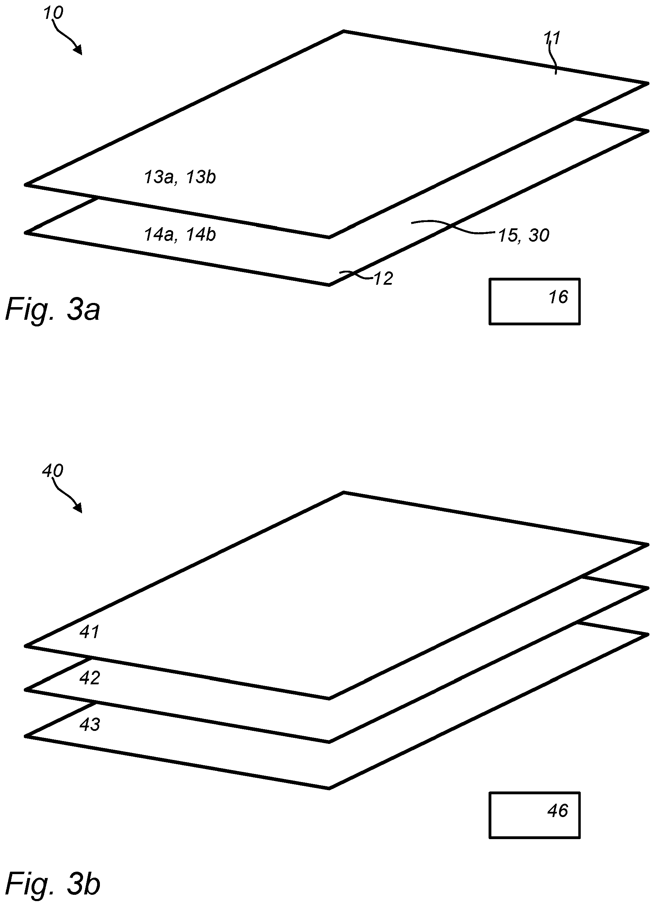

**Figure 3a** schematically shows an embodiment of a light modulator 10, which may be applied in smart glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner-side of first substrate 11 at least two electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14. One or more of substrates 11 and 12 may be provided with one or more contact areas to enable electrical connection to at least the one or more electrodes applied on the substrate(s).

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule. The fluid may be a liquid.

The electrodes are arranged for driving particles 30 to move towards or away from electrodes, depending on the electric field applied. The optical properties, in particular the transparency or reflectivity of the light modulator depend on the location of particles 30 in the fluid. For example, a connection may be provided for applying an electric field to the electrodes.

Light modulator 10 may be provided with a structuring agent in the optical layer which limits diffusion of the pigment particles in all or part of the optical layer, at least when the optical layer is in a particular optical state.

The electrodes 13 and 14 are shown schematically in the figures. They may be implemented in a number of ways, e.g., as shown in figures 2.

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semiconducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle (5*10⁻¹-0.1 C/m²).

In an exemplary embodiment of the light modulator the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator the particles are present in an amount of 0.01-70 g/m², preferably 0.02-10 g/m², such as 0.1 -3 g/m².

In an exemplary embodiment of the light modulator the particles have a color selected from cyan, magenta, and yellow, and from black and white, and combinations thereof.

The light modulator can be also configured to only, or primarily, modulate non-visible light such UV or near-IR, e.g., respectively in the range of about 10 nm-380 nm, and in the range of about 750 nm - 1 µm.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity Er of less than 100, preferably less than 10, such as less than 5. In an exemplary embodiment of the light modulator, fluid 15 has a dynamic viscosity of above 10 mPa.s

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 nS2m (at 273K; for comparison, typically used ITO has 105 nS2m), which is similar to an electrical conductivity >1*10⁷ S/m at 20°C).

In an embodiment of the light modulator, electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electric field to the electrodes, wherein the applied electric field to the electrodes provides movement of the nano- and microparticles from a first electrode to a second electrode and vice versa. A connection for applying an electric field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller 16. The controller 16 may be connected to the contact areas of the light modulator.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electric field. As such also the appearance of the light modulator, or one or more parts thereof, may be changed. For example, a segment may have an area of at least 1 mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11, 12 of a first light modulator is the same as a substrate 11, 12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with a contact area for electrical connection to the electrodes, e.g., for control by controller 46.

Light modulator 40 may be provided with a structuring agent in the optical layer which limits diffusion of the pigment particles in all or part of the optical layer, at least when the optical layer is in a particular optical state.

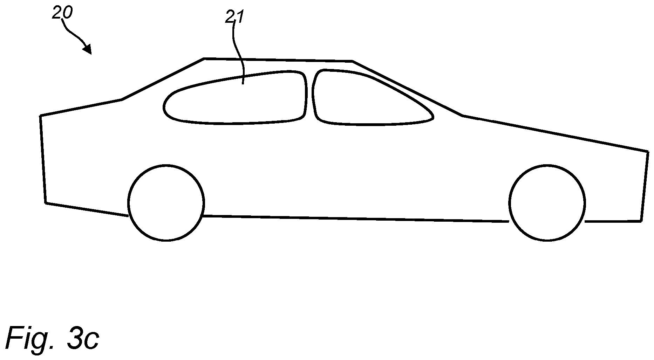

**Figure 3c** schematically shows an example of an embodiment of a car 20 having smart glazing for windows 21. This is a particularly advantageous embodiment, since while driving the level of incident lighting can change often and rapidly. Using smart glazing in a car has the advantage that light levels can be maintained at a constant level by adjusting the transparency of the car windows. Moreover, the reduced diffraction effect improves safety as it reduces driver distraction. Car 20 may comprise a controller configured for controlling the transparency or reflectivity of windows 21.

Smart glazing can also be used in other glazing applications, especially, where the amount of incident light is variable, e.g., buildings, offices, houses, green houses, skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40 may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

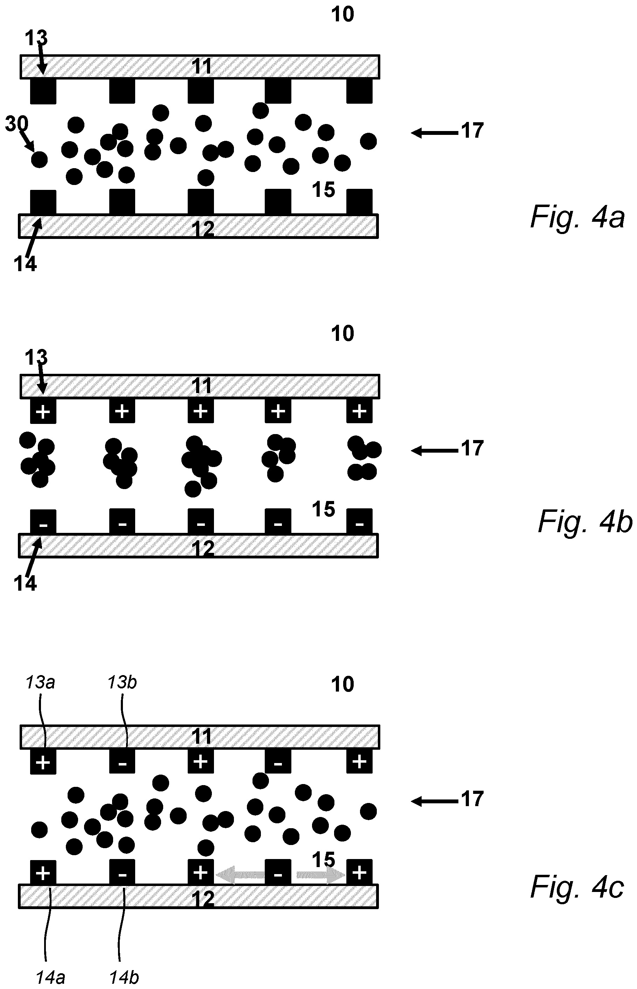

**Figures 4a-4b** schematically show a side view of an embodiment of a light modulator 10 in use. In this figure only the electrodes are shown. The contact area(s) are not separately shown in these figures. Shown are a first substrate 11, and a second substrate 12. Between the substrates is an optical layer 17 comprising a fluid 15 comprising particles 30. Electrodes 13 are applied on a surface of first substrate 11. Electrodes 14 are applied on a surface of second substrate 14. The electrodes may comprise electrodes 13a, 13b and electrodes 14a, 14b respectively, as shown in figure 4c.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: at least two for each substrate. But more electrodes may be used and connected to the controller; for example, more than two electrodes may be used for a substrate to better fine-tune grayscaling and driving to non-transparent or reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This state is similar to the state shown in figure 4b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform, the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

**Figure 4c** shows how a state of decreased transparency or increased reflectivity can be obtained. An alternating voltage is applied on the same substrate. For example, in an embodiment a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 4c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2f, etc.

The extent with which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1 mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent off-set in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less responsive to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with a different resistance will give rise to a different electric field. For example, ITO will have a smaller electric field, even though driven with the same voltage.

An embodiment of a method of modulating light comprises applying an electric potential to multiple electrodes applied to two opposing substrates according to an embodiment to obtain an electric field between the multiple electrodes providing electrophoretic movement of the particles towards or from one of the multiple electrodes causing modulation of light shining through the substrates, wherein the two opposing substrates are as in an embodiment.

Light modulator 10 may be provided with a structuring agent in the optical layer which limits diffusion of the pigment particles in all or part of the optical layer, at least when the optical layer is in a particular optical state.

Various modes of operation are supported by an embodiment of a four-electrode light modulator system.

### Horizontal drive

Horizontal drive is a mode in which lateral electric fields are created along the substrate. The light modulator may apply alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

Horizontal and vertical drive can be combined to form a diagonal drive.

### Maintaining a grayscale

The light modulator drive system may apply 0 voltage on the electrodes most of the time, but if the grayscale is dropping, due to the particles dispersing, then briefly the electrodes may be driven as in vertical drive.

In all three modes, the driving may use DC or AC signals. Preferably, AC signals are used.

**Figure 5a** schematically shows an example of an embodiment of a light modulator 500. Light modulator 500 comprises a first substrate 511 and a second substrate 512. First substrate 511 and second substrate 512 are arranged with inner sides opposite to each other. At least one electrode is applied to the inner side of first substrate 511. An optical layer 517 is arranged between first substrate 511 and second substrate 512. Optical layer 517 comprises a fluid ink containing pigment particles that are electrically charged or chargeable. Figure 5a shows the pigment as small black discs, two of which are indicated with a reference numeral: pigment particle 531 and pigment particle 532.

The at least one electrode is configured, upon application of an electric potential, to generate an electric field in optical layer 517 providing electrophoretic or dielectrophoretic movement of the pigment particles, thereby causing modulation of the optical properties of the light modulator 500.

Typically, more than one electrode is used, e.g., at least two electrodes. In an embodiment which is currently preferred, four electrodes are used: two electrodes on first substrate 511 and two electrodes on second substrate 512. Increasing the number of electrodes improves the versatility with which the pigment particles may be moved in the optical layer. The electrodes are not separately indicated in figure 5a.

Optical layer 517 further comprises a structuring agent. The structuring agent limits the diffusion of the pigment particles in the ink in at least part of the optical layer, and at least when the optical layer is in a particular optical state-for example, if the optical layer is in a stable optical state, more particularly a stable, transparent optical state. The structuring agent is not separately indicated in figure 5a.

Figure 5a shows a region 501, schematically indicated as the inside of a dashed oval, in which diffusion of the pigment particles in the ink is limited. Figure 5a shows a region 502, schematically indicated as the outside of the dashed oval, in which diffusion of the pigment particles in the ink is not limited. For example, diffusion of the pigment particles in region 501 is more limited compared to the diffusion of the pigment particles in region 502.

In particular, the structuring agent may increase viscosity of the ink in at least part of the optical layer and at least when the optical layer is in a particular optical state, thus limiting diffusion of pigment particles in said part. For example, viscosity in region 501 may be higher than viscosity in region 502.

Including a structuring agent inside the solvent of the ink improves the bistability of light modulator 500. The structuring agent may be a chemical or group of chemicals that forms a region in the optical layer with increased viscosity, e.g., a network of molecules within the ink fluid through intermediate interaction forces. Within this region the motion of other elements in the ink is restricted, in particular that of pigment particles, thereby macroscopically stabilizing the local concentration of the ink.

Figure 5a shows a situation in which region 501, e.g., the high-viscosity region, has an increased concentration of pigment particles, e.g., compared to region 502. In particular, pigment particle 531 is shown inside region 501, and pigment particle 532 is shown inside region 502.

As a result, light passing through region 501 will be affected by pigment particles more than light passing through region 502. The difference in concentration thus affects the modulation of the light. Advantageously, as diffusion is reduced in region 501 fewer electric field-induced forces are needed to maintain this concentration difference. In particular, pigment particle 531 is less likely to diffuse and more likely to stay in region 531. On the other hand, pigment particle 532 may continue to diffuse in region 502. Note that pigment particle 532 is unlikely to enter region 531, at least not far, also due to the decreased diffusion in region 501.

For example, light transmission in a light modulator may be increased by concentrating the pigment particles inside the electrode volume, e.g., the volume of the optical layer opposite an electrode, particularly when electrodes on both substrates are used, the volume between opposing electrodes on opposing substrates. By also arranging a low-diffusion region in the electrode volumes, this transparency is maintained longer without needing to apply electric forces. That is, without a structuring agent, the pigment particles, once concentrated using electric forces, would eventually disperse again, and reducing the transmission in the light modulator, thereby necessitating the creation of an electric field with the electrodes to move the pigment particles back to the electrode volume. However, using a structuring agent, diffusion is reduced, at least in the electrode volume, and at least during a high-transmission optical state, so that the moment when pigment particles need to be moved back to the electrode volume to counter diffusion is postponed. As a result bistability is increased, and electric power consumption of the light modulator is reduced.

There are many options for the structuring agent. For example, the structuring agent may comprise a gelling agent, a thickening agent, and/or a rheology modifier. Gelling agent are substances used to form gels, which give structural support by creating a network within a fluid. Thickening agents are substances that increase the viscosity of a solution. Rheology modifiers alter the viscosity or flow behavior, such as shear-thinning.

For example, a structuring agent may form a network in low-diffusion regions 531 through various types of interactions, including: chemical cross-links, rheological modifiers, viscosity modifiers, e.g., through physical forces including Van der Waals forces and hydrogen bonds between the molecules of the structuring agent.

In an embodiment, the structuring agent may decrease diffusion throughout the optical layer. In an embodiment, the structuring agent may decrease diffusion in all optical states. However, advantageously, the structuring agent's effect on diffusion may be modulated. For example, the structuring agent may locally decrease diffusion, e.g., by locally increasing viscosity, in parts of the optical layer where a local concentration of the structuring agent exceeds a threshold. For example, in an embodiment, the structuring agent limits pigment particle diffusion in the ink fluid only in parts of the optical layer where the concentration of the structuring particles exceeds a structuring agent threshold concentration.

As will be discussed below, shear-thinning is useful a property for the structuring agent to have, especially in combination with an embodiment in which diffusion is reduced throughout the optical layer. In such a combination, diffusion would be reduced everywhere and at all times, except during optical transitions from one optical state to another, e.g., when increasing or decreasing transparency. Shear-thinning is however not necessary, especially not in combination with localized diffusion modulation.

For example, one way to create local differences in the extent to which diffusion is limited, e.g., viscosity is increased, is to use a structuring agent whose activity depends on its concentration. For example, the structuring agent may be concentrated in a region, e.g. region 501, increasing the viscosity of said region, and thus controlling the diffusion of pigment particles in said region.

For example, the structuring agent may have a critical concentration-dependent viscosity, e.g., showing a non-linear increase in viscosity when the concentration exceeds a particular threshold, in particular a super-linear increase. For example, the structuring agent may be a threshold gel, or more generally, a critical gel, that exhibits a significant change in behavior when the concentration of the structuring agent surpasses a critical concentration.

Concentrating the structuring agent may involve moving structuring agent elements, e.g., particles, molecules, chemicals, etc., through the optical layer towards region 531. Moving structuring agent elements may use the same electrodes that are also used to move the pigment particles, possibly using the same type of forces, although one may be primarily moved using electrophoretic forces, while the other may use dielectrophoretic forces. Moving the structuring agent elements may use different forces altogether; for example, the structuring agent may be manipulated thermally or with light. The structuring agent may also be moved using magnetic forces.

Interestingly, once a low diffusion region has been formed, it tends to maintain itself without needing further external forces to do so. In particular, as the structuring agent decreases diffusion, it will also decrease diffusion of the structuring agent outside region 531. Furthermore, whatever concentration differences exist between region 531 and region 532 tend to be maintained, without needing further external forces to do so. In conventional light modulators the electric field could be switched off for comparatively brief intervals, that is, until natural diffusion destroys the artificial concentration created between different regions. However, using a structuring agent, these artificial concentration differences tend to remain, or at least be maintained far longer than without a structuring agent. Accordingly, once the decreased diffusion region, e.g., an increased viscosity region, is formed, the electric field may be reduced or stopped on the electrodes on first substrate 511 and second substrate 512. The structuring agent will continue to reduce diffusion out of region 531 and/or region 532.

The viscosity of the ink in the part of the optical layer with limited diffusion is a key factor in the performance of light modulator 500, particularly in terms of maintaining stability in a stable optical state and enabling efficient modulation during optical transitions. When the light modulator is in a stable optical state, and at a room temperature of 20 degrees Celsius, the ink in the low-diffusion regions, such as region 531, has a viscosity that can vary within specific ranges. For instance, the viscosity in these regions may be at least 100 mPa.s, or at least 200 mPa.s, or at least 500 mPa.s, or at least 1000 mPa.s, depending on the requirements of the application. On the upper end, the viscosity may also be controlled to not exceed certain thresholds, with maximum viscosities of 1000 mPa.s, 5000 mPa.s, or even 10000 mPa.s, to ensure that the ink maintains its desired low-diffusion characteristics in these regions, thereby stabilizing the pigment particle distribution.

During the modulation of optical properties-when the pigment particles are actively moved within the optical layer, either electrophoretically or dielectrophoretically-the viscosity of the ink in the low-diffusion regions may decrease, e.g., due to a shear-thinning effect. This enables efficient movement of the pigment particles. At 20 degrees Celsius, the viscosity in these regions may be reduced to at least 1 mPa.s, 10 mPa.s, 20 mPa.s, or 50 mPa.s, e.g., depending on the optical state being transitioned into and the force exerted on the pigment particles. Similarly, the viscosity may also be controlled to ensure it does not exceed certain values during modulation, with maximum viscosities of 50 mPa.s, 80 mPa.s, or 100 mPa.s in these low-diffusion regions. This control of viscosity allows the pigment particles to move more freely during modulation while still maintaining the bistability of the system when transitioning to or from different optical states.

For example, in an embodiment, a ratio between viscosity in a low-diffusion region 531 and a high-diffusion region during a stable optical state at 20 degrees may be at least 1.5, at least 2, at least 5, or at least 10. These ratios may decrease considerably during transitioning between states, e.g., even approaching a factor of 1.

Shear-thinning is advantageous as it allows faster transition of optical states, e.g., faster increase or decrease of transparency. However, even without shear-thinning, having lowered diffusion, especially localized lowered diffusion, is advantageous, e.g., to decrease power consumption and to address the curtain effect (further expanded below).

Figure 5a shows a situation in which a concentration of pigment particles in region 531, e.g., a low-diffusion region, is higher than the concentration of pigment particles in region 532, e.g., a high-diffusion region. For example, this concentration modulation, e.g., a particular distribution of pigment particle concentration across the light modulator, may come about from moving the pigment particles using an electric field, e.g., using the electrode system, e.g., the one or more electrodes on the substrates. The concentration differences will have an effect on the optical properties of the light modulator. For example, if the high concentration of pigment particles is in a small region 531, then the optical modulator will be relatively transparent. On the other hand, if the high concentration of pigment particles is in a wide region, then the optical modulator will be relatively opaque. **Figure 5b** schematically shows an example of an embodiment of a light modulator 505, in which a concentration of pigment particles in region 531, e.g., a low-diffusion region, is lower than the concentration of pigment particles in region 532, e.g., a high-diffusion region. As in figure 5a, this may be brought about using an electric field created by the electrodes. Interestingly, in both situations shown in figures 5a and 5b, once it has been set up, the system will maintain itself for a comparatively long time, since the problem of natural diffusion between regions of high and low concentration has been reduced-even if electric power to the electrodes is cut or reduced.

It is particularly advantageous to use the structuring agent to create different regions for the space between electrodes on opposite substrates (the electrode volume) and the space between electrodes on the same substrate. In particular, the electrode volume may be the low-diffusion region. This leaves the ink fluidic in the volumes outside the electrode volumes. This in turn reduces the curtain effect.

For example, in an embodiment, the structuring agent partitions the optical layer into alternating bands of high-viscosity and low-viscosity. To get bistable, high transparency, the pigment particles may be concentrated in the high-viscosity bands. The more narrow the high-viscosity bands are, and the higher the concentration of pigment particles therein, e.g., compared to the concentration in the low-viscosity bands, the more transparent the light modulator. For lower transparency, the pigment particles may be concentrated in the low-viscosity bands. Lower viscosity decreases the curtain effect.

An advantageous arrangement is to align the high-viscosity regions with electrode lines on the substrate. An example thereof is shown in the next figures.

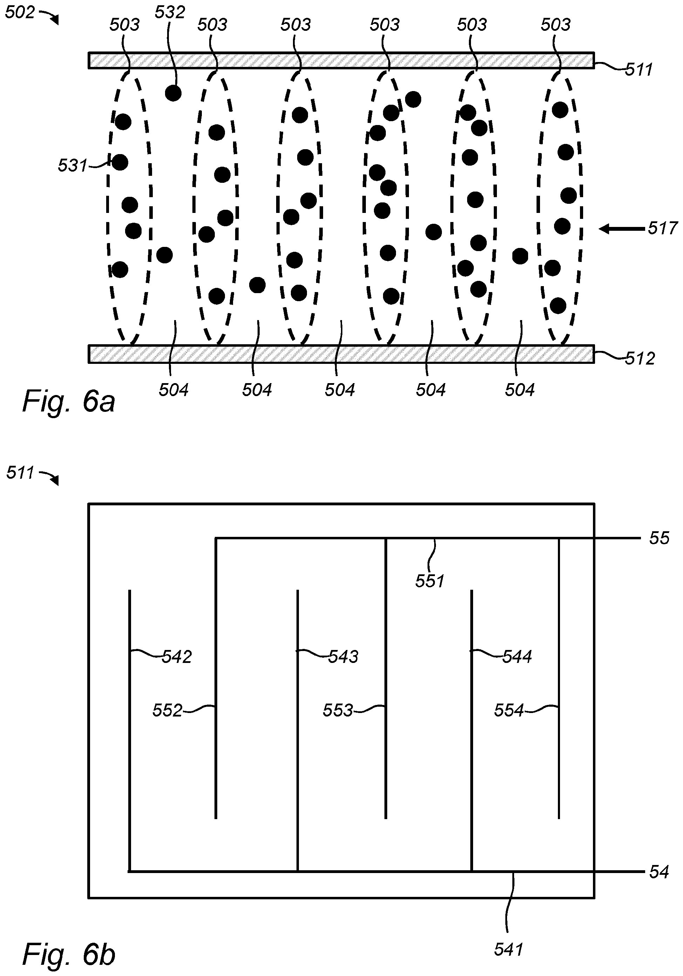

**Figure 6a** schematically shows an example of an embodiment of a light modulator 506.

As in figure 5a, light modulator 506 comprises a first substrate 511 and a second substrate 512. The first and second substrates are arranged with inner sides opposite to each other. An optical layer 517 is arranged between the first and second substrates. Optical layer 517 comprises a fluid ink containing pigment particles and a structuring agent, wherein the pigment particles are electrically charged or chargeable. Pigment particles 531 and 532 are labeled with a reference numeral. The structuring agent is not separately visible.

On first substrate 511 as well as on second substrate 512 at least one electrode is applied; typically both first substrate 511 and second substrate 512 will each have multiple electrodes, e.g., at least two electrodes. A four electrode system is preferred, having two electrodes on each substrate, however other combinations are possible, e.g., 3 electrodes on each substrate, 2 electrodes on one, but 1 or 3 electrodes on the other, etc.

For simplicity, we will assume that both first substrate 511 and second substrate 512 will each have two electrodes applied on them, with the understanding that the exact number of electrodes may be varied.

The electrodes on the substrates in the embodiments of figures 6a-9c each comprise multiple electrode lines arranged in a pattern across the substrate. The electrode lines of the multiple electrodes on a substrate are interdigitated, e.g., alternate on the substrate. For the light modulator of figure 6a, a simple two electrode, interdigitated pattern is used.

Optical layer 517 comprises a structuring agent that limits the diffusion of the pigment particles in the ink in at least part of the optical layer and at least when the optical layer is in a particular optical state. Figure 6a shows high-viscosity regions 503 alternating with low-viscosity regions 505.

**Figure 6b** schematically shows an example of an embodiment of light modulator substrate 511. Substrate 512 would be the mirror image of substrate 511, so that once the substrates are placed opposite each other, the electrode lines on opposite substrates align. Having at least two interdigitated electrodes on each substrate allows fine control of the pigment particles.

Figure 6b shows a standard two-electrode interdigitated electrode pattern. Shown in figure 6b is a first electrode 55, with a main line 551 from which digits 552, 553, and 554 emanate, and a second electrode 54, with a main line 541 from which digits 542, 543, and 544 emanate. Note that the digits alternate on substrate 511.

Figures 6a and 6b, though schematic, have been aligned so that the electrode lines in figure 6b align with the high-viscosity regions. In light modulator 506, the viscosity of the ink is increased by the structuring agent adjacent to the multiple electrode lines, compared to regions between the multiple electrode lines. Regions 503 are in the electrode volumes between opposite electrodes, while regions 504 are in the volume between adjacent electrodes.

This arrangement may be achieved by moving the structuring agent to the high-viscosity regions 503, away from the low-viscosity regions. As the concentration of the structuring agent increases, the viscosity is also increased. In particular, a critical structuring agent, such as a critical gelling agent, has a non-linear increase in viscosity once the concentration passes a critical threshold, e.g., super-linear. This may materialize as a sudden increase in viscosity past the threshold, with only marginal increase in viscosity below the critical threshold.

For example, in figure 6a, the structuring agent has been moved towards the electrode lines, causing an increase in the local concentration of the structuring agent in the electrode volumes, and a decrease in the local concentration of the structuring agent outside of the electrode volumes. As a result, viscosity is increased in the electrode volumes and decreased outside the electrode volumes.

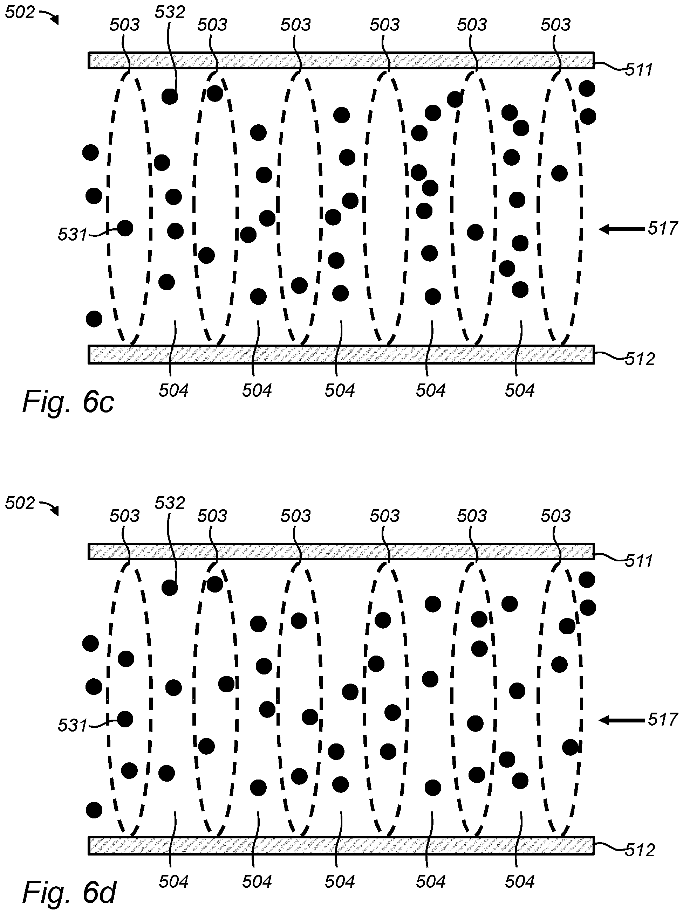

In the configuration of figure 6a, both the structuring agent and the pigment particles are concentrated in the electrode volumes, which leads to an increase in transparency. **Figure 6c** schematically shows an example of an embodiment of a light modulator 506. In the arrangement shown in figure 6c, the structuring agent is concentrated in the electrode volumes, e.g., the volume between opposite electrode lines on opposite substrates, while at least part of the pigment particles are moved outside the electrode volume, e.g., to a volume between electrode lines on the same substrate. In this arrangement, transparency is lower compared to that of figure 6a, whereas bistability is still achieved. Finally, **Figure 6d** schematically shows an example of an embodiment of a light modulator 506 in which the pigment concentration is balanced between the electrode volumes and the volume outside thereof. The structuring agent is still concentrated at the electrode volume. Figure 6d may be seen as a midway point between figures 6a and 6c, and may be used to obtain a grayscale in the light modulator.

In all cases, e.g., figures 6a, 6b, and 6c, once the increased viscosity is formed, the electric field used to move at least the pigment particles may be reduced or stopped on the electrodes on the first and second substrate. The structuring agent will, however, continue to reduce diffusion out of the first volume and/or second volume, leading to an increase in bistability.

In these examples, you can remove the structure, at least temporarily, using the electric field. Pigment particles can the network once a force is exerted on them. Directly moving the structure agent may have the same effect. This effect is stronger if the structuring agent has a shear-thinning property. Accordingly, an electric field controlled gel is obtained by using the structuring agent. The gel may be a microgel.

In an embodiment, the light modulator is configured to measure a current in the optical layer. For example, a current may be measured between any two different electrodes on first substrate 511 and second substrate 512. In an embodiment, current is measured at least between a pair of electrodes on the same substrate, and between a pair of electrodes on opposite substrates.

The electric current is changed depending on the distribution of the structuring agent and pigment particles in a predictable manner; accordingly, the viscosity of the ink by the structuring agent may be determined in at least part of the optical layer. This information may be used to continue driving the electrodes to further adjust the distribution of the structuring agent and/or pigment particles in the optical layer. For example, a desired distribution of the structuring agent and/or pigment particles may be compared to a distribution derived from the measurements, and a corresponding driving signal may be computed. For example, in an embodiment, a model is configured to predict said measurements from a given distribution of the structuring agent and/or pigment particles; accordingly, given the measurement, the distributions may be determined. During the driving, e.g., during measuring intervals between the driving intervals, measurements may be performed , possibly leading to an update of the driving signal, e.g., using a feedback system.

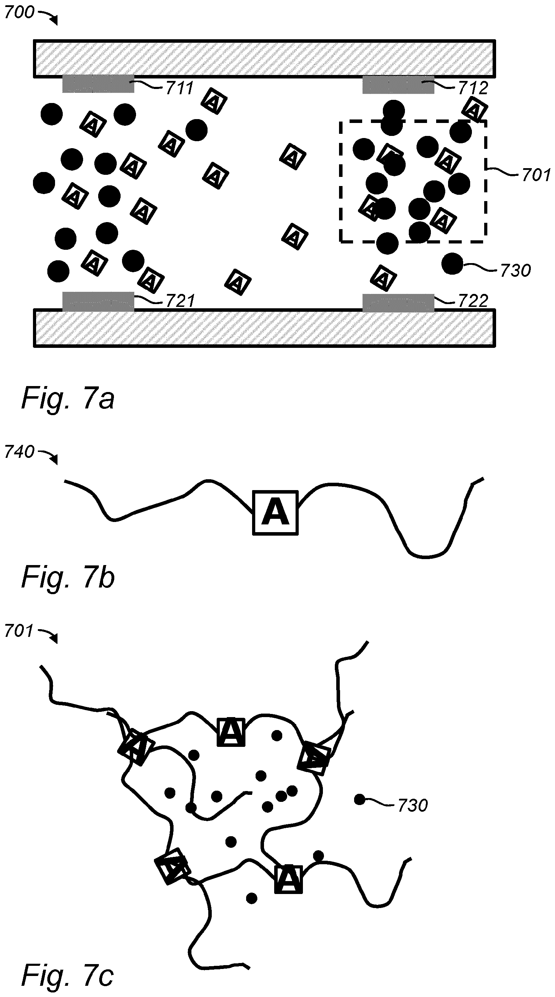

**Figure 7a** schematically shows an example of an embodiment of a light modulator 700. Shown schematically in figure 7a are two opposite substrates, with an optical layer therebetween. Also shown are four electrodes: two electrodes on each substrate. Shown are electrode 711 and electrode 712 on a first substrate, and electrode 721 and electrode 722 on a second substrate. Although the schematic figure shows only a cross section of one electrode line for each electrode, in practice there may be many more electrode lines for each electrode.

Figure 7a further shows pigment particles, as black discs, one of which is labeled 730, in addition to the structuring agent. The structuring agent elements, or structuring agent particles, are labeled with the letter A. In the situation shown, the structuring agent particles and the pigment particles are both concentrated at the electrode volumes, though this is not needed, as discussed above.

**Figure 7b** schematically shows an example of an embodiment of a structuring agent 740. In this case, the structuring agent is a gelling agent. The structuring agent particle has branches or arms that can connect to other arms of other structuring agent particles, forming a high-viscosity region, e.g., a gel. Figure 7a shows one such region at 701. **Figure 7c** schematically shows an example of an embodiment of high-viscosity region 701. The branches of the structuring agent particles form a spontaneous network, entrapping the pigments and other ink chemicals. The ink becomes less fluidic due to the network.

Structuring agent particles, such as a gelling agent, may be uncharged. They could be moved, for example, using the dielectrophoretic force. The structuring agent particles may have a magnetic moment and may be moved using magnetic forces. The structuring agent particles may be charged, e.g., they may comprise a functional group carrying a charge, in which case they may be moved by dielectrophoretic, electrophoretic, or magnetic forces, etc. Making or breaking of viscosity regions may also use other mechanisms, e.g., light, thermal, UV radiation, etc.

A particularly advantageous choice is to use a structuring agent with shear-thinning properties; for example, a gelling agent, as most gelling agents exhibit such characteristics. Using standard shear-thinning molecules for the structuring agent, applying an electric field, particularly a vertical electric field, will selectively attract the pigment particles, breaking the network of structuring agent, e.g., the shear-thinning molecules. When the electric field is stopped, the shear-thinning network reforms, preventing the pigments from freely moving and stabilizing their position between the electrodes.

A structuring agent may be composed molecules, which can dissolve in the fluid of the optical layer (e.g., in a solvent) and possess functional groups that enable interactions with other molecules. These molecules can spontaneously form a network, entrapping the pigments and other ink components, thereby reducing the fluidity of the ink. This mechanism allows for bistable operation with a natural gray effect, where pigments concentrated beneath the electrodes are immobilized by the network formed by the structuring agent, while pigments in the regions between the electrodes remain free to move and disperse. The structuring agent molecules may be shear thinning molecules.

In light modulators, grayscales or intermediate light transmission states are typically controlled by the dispersion of pigments near the electrodes, which can lead to the undesired curtain effect. The curtain effect degrades the optical properties of the light modulator and increases the visibility of the electrode pattern by widening the dark regions around the electrodes. By incorporating a partial shear-thinning element in the ink, intermediate states of the light modulator not only remain stable without power, but also allow for a more natural transition, as pigments that are not concentrated under the electrodes can move freely in the spaces between the electrodes. This configuration minimizes diffraction effects and reduces the visibility of the electrode pattern in intermediate states compared to the clearest state.

In an embodiment, a structuring agent is used that can form a network, and which are preferably charged and larger than the solvent molecules. These elements may be included in the ink at a concentration below the minimum required for spontaneous network formation.

In one embodiment, the structuring agent may have a charged group, possibly to allow interactions with other molecules. These charged molecules will also migrate toward the electrode area during operation. Consequently, the pigments that are left between the electrodes remain free to move when the electric field is deactivated. The charge can be located anywhere on the structuring agent molecule and does not need to be on the interaction site responsible for forming the network, e.g., a branch of the structuring agent molecule.

In the dark state, when the concentration of a structuring agent is low, they remain freely dispersed in the solvent without forming a network. The concentration is insufficient to gel the ink. During an optical transition, as pigments move toward the electrodes, the charged structuring agent also migrate toward the electrode areas. This increases the local concentration of structuring agent in the electrode region, surpassing the threshold required for network formation. While the electric field is active, the pigment particles remain free and aligned with the field, which may prevent the formation of a network. The ink in the electrode region remains fluid. However, when the electric field is deactivated, the structuring agent in this area connect and form a network, solidifying the liquid and freezing the pigments in place. In contrast, the liquid outside the electrode region, which contains little or no structuring agent, allows pigments in this area to disperse uniformly.

By applying a horizontal electric field or a series of random electric fields (e.g., including one or more of vertical, horizontal, diagonal), both the pigments and the charged structuring agent will redistribute throughout the volume of the liquid. This reduces the concentration of structuring agent to a level where no network is formed.

The initial concentration of structuring agent in the ink should be correlated with the electrode design. For example, if the electrode design covers 20% of the light modulator's active area, the initial concentration may be chosen between 1/5 and 1/2 of the minimum concentration required to form a network. For an electrode coverage of 50%, the concentration may be chosen in the range from 1/2 to 3/4 of the minimum concentration.

For example, in an embodiment, a field, such as an electric or magnetic field, is applied between electrodes of opposite substrates, moving pigment particles and/or the structuring agent therein. This breaks a local structure of the structuring agent in the liquid, wherein the local concentration of the structuring agent in the first volume remains above a threshold. Because the local structure of the structuring agent is broken, viscosity is reduced during movement, e.g., during an optical transition. However, as the concentration is kept above a threshold, as soon as the movement stops, the local structure, e.g., a network, reforms leading to increased viscosity of the ink locally once the electric or magnetic field ceases.

Interestingly, in the absence of an electric field, the structuring agent increases the resistance to movement of the pigment particles within the ink, thereby limiting their diffusion in the optical layer, and the application of an electric field generated by the at least one electrode reduces the resistance, thus increasing diffusion of the pigment particles in the optical layer. Thus, both high stability and fast transitions can be realized.

In effect, the motion of the pigment particles induced by the electrical fields modulates the viscosity of the ink by modifying the structure of the structured ink.

In an embodiment, a bistable electrophoretic system comprises a shear-thinning component inside the solvent of the ink. That chemical or group of chemicals can create a network of molecules inside the solvent by means of intermediate interaction forces between them. When those molecules are connected to each other in a network, the other elements in the ink have limited motion capabilities, which macroscopically freeze the local concentration in the ink.

There are various ways in which the structuring agent may be moved in the optical layer, e.g., how local concentration of the structuring agent may be modulated.

For example, the structuring agent may comprise electrically charged or chargeable structuring particles, e.g., polymers and/or molecules. The generated electric field in the optical layer may provide electrophoretic or dielectrophoretic movement of the structuring particles together with the movement of the pigment particles. Note that for dielectrophoretic movement, no charge is needed on the structuring agent.

For example, the structuring agent may comprise magnetic particles. The light modulator may be configured to generate a magnetic field in the optical layer providing movement of the structuring agent, causing modulation of viscosity in the optical layer.

Interestingly, while movement of the structuring agent may be induced by one of magnetic, electrophoretic, or dielectrophoretic forces, in an embodiment, the movement of the pigment particles is induced by a different one of magnetic, electrophoretic, or dielectrophoretic forces. For example, in an embodiment, the movement of the structuring agent is induced by a dielectrophoretic force and the movement of the pigment particles is induced by an electrophoretic force.

In this case, the dielectrophoretic force and the electrophoretic force may be generated by the same electrode of the at least one electrode. For example, the dielectrophoretic force may be generated by an AC signal on the electrode of at least 1kHz, and the electrophoretic force is generated by a DC signal or an AC signal below 1kHz or below 100 Hz. In this case, both forces may be induced by the same electrode.

Using different forces for these two classes of particles eases arranging the particles in different locations, e.g., having a different concentration distribution. Note that this is not necessary, and this effect can also be achieved using a structuring agent and pigment particles that move at different speeds. For example, the movement of the structuring agent may be at least 2 times as slow as that of the pigment particles, or at least 10 times as slow as that of the pigment particles.

In an embodiment, the structuring agent has a molecular weight of at least 1 × 10³ Daltons, or even a molecular weight of at most 5 × 10⁷ Daltons. For example, the structuring agent may comprise a polymer or copolymer, preferably having at least one charged or chargeable monomer.

Nevertheless, even though the structuring agent increases bistability, a light modulator may still be configured to periodically apply an electric field between an electrode on the first substrate and an electrode on the second substrate to move charged pigment particles and/or charged structuring agent to a region between the electrodes. However, the frequency with which such adaptations are needed is reduced.

A light modulator may be configured to switch to a first optical state by creating an alternating voltage between the first and second substrate, applying an alternating current between a first electrode on the first substrate and a first electrode on the second substrate, and/or between a second electrode on the first substrate and a second electrode on the second substrate. The effect is to concentrate the pigment particles between opposite electrodes, leading to an increase in transparency.

A light modulator may be configured to switch to a second optical state by creating an alternating voltage on at least one of the first and second substrates, applying an alternating current between at least a first electrode and a second electrode on the first substrate and/or between a first electrode and a second electrode on the second substrate. The effect is to disperse the pigment particles through the optical layer, leading to a lowering of transparency.

Interestingly, viscosity may be reduced during switching to the second optical state, e.g., due to the breaking of networks in the optical layer, due to the movement of the pigment particles. This is a shear-thinning effect. On the other hand, viscosity may be increased after switching to the first optical state, because the structuring agent is also concentrated at the electrodes, leading to an increase in concentration of the structuring agent. Such an increase in concentration may give a corresponding increase in viscosity, and may provide an even larger increase in viscosity for a critical structuring agent.

Various types of structuring agents may be used in an embodiment, each capable of lowering viscosity, and preferably, locally lowering viscosity. For example, the structuring agent may comprise a gelling agent, a thickening agent, and/or a rheology modifier. A gelling agent is an advantageous choice, as most gelling agents also exhibit shear-thinning. The gelling agent structures the ink by gelling the ink. For example, the structuring agent may gel the optical layer when the optical layer is in a stable optical state, but reduce gelling during electrophoretic or dielectrophoretic movement of the pigment particles.

For example, the structuring agent may have a critical concentration-dependent viscosity, e.g., having a non-linear increase in viscosity occurring when the concentration exceeds a particular threshold. For example, the structuring agent may be a threshold gel, or more generally, a critical gel, that exhibits a significant change in behavior when the concentration of the structuring agent surpasses a critical concentration.

For example, the structuring agent may exhibit a phase transition or gelation threshold, where the agent forms a network or undergoes a dramatic increase in viscosity or gel-like behavior when its concentration exceeds a certain level. For example, this can be seen in polymers with critical gelling concentration. These can self-assemble or crosslink beyond a specific concentration, leading to a rapid change in viscosity. Also, hydrogels and similar materials exhibit a sol-to-gel transition at a critical concentration. Critical structuring agent is not limited to gelling agents; for example, rheology modifiers can also change their flow behavior after reaching a certain concentration.

Below, more options for the structuring agent are discussed.

In an embodiment, the structuring agent forms a solvophobic domain within the structured ink, the solvophobic domain comprising one or more of: styrenics, low alkyl (meth)acrylates, ethylene, carbonates, polyesters, polyamides, polyurethanes.

In an embodiment, the ink comprises one or more chemically cross-linkable domains selected from: free-radical cross-linking with vinyl or acrylic, Michael addition with amine and carbonyl complements, click chemistry, alcohol and isocyanate complements, amine and isocyanate complements.

The Michael addition may be a nucleophilic addition reaction where a nucleophile, such as an amine, adds to an α,β-unsaturated carbonyl compound. This reaction forms a carbon-carbon or carbon-heteroatom bond, allowing the two components to be chemically cross-linked. An advantageous choice is for the Michael addition to involve an amine as the nucleophile reacting with a carbonyl-containing compound, e.g., an enone or α,β-unsaturated ketone or ester, resulting in a stable linkage. This mechanism is useful in creating cross-linked networks because it occurs under mild conditions and does not typically require high temperatures.

In an embodiment, the structuring agent comprises
- polyethylene oxide (PEO), e.g., in a concentration of at least 1% w/v, and at most 5% w/v, and/or
- xanthan gum, e.g., in a concentration of at least 0.1% w/v and at most 2% w/v.

In an embodiment, the structuring agent forms a space-filling domain within the optical layer, the space-filling domain filling at least part of the space between the electrodes, while allowing the movement of pigment particles in and out of the space-filling domain, wherein optionally, the structuring agent comprises swollen polymer microgels and/or dendrimers.

In an embodiment, the structuring agent comprises one or more of:
- ionic polymers,
- acrylate-based polymers, acrylate-based polymers configured to carry electrical charges, e.g., acrylate-based polymers wherein the polymer chains include one or more ionic groups,
- conductive polymers, e.g., polypyrrole, polythiophene, e.g., polymers made conductive by doping with ions.

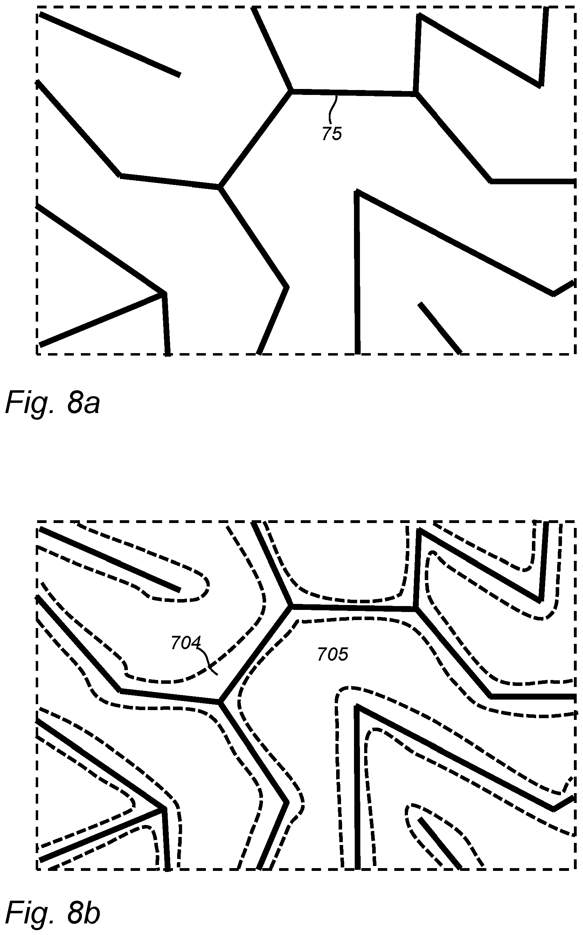

The electrodes may be considerably more complicated than shown in figure 6b. **Figure 8a** schematically shows an example of an embodiment of a light modulator, in particular a detail of the electrode lines on one of the substrates. The electrodes of figure 8a are also digitated, e.g., multiple electrode lines emanating across the substrate. In case two or more electrodes are used, as is preferred, the electrodes are interdigitated, e.g., their digits alternating on the substrate.

Note that the electrode lines may not be parallel, may bifurcate, etc. Nevertheless, if multiple electrodes are used, they are still interdigitated. One of the electrodes is indicated with reference number 75. **Figure 8b** schematically shows an example of an embodiment of the same light modulator, wherein high-viscosity regions 704 and low-viscosity regions 705 are formed with a structuring agent. In this case, the high-viscosity regions 704 are formed around the electrodes. As in figures 6a and 6b, the high and low-viscosity regions 704 form alternating bands in the optical layer; however, here the pattern is much more complicated. Such complicated electrode designs are advantageous as they reduce diffraction effects in the light modulator.

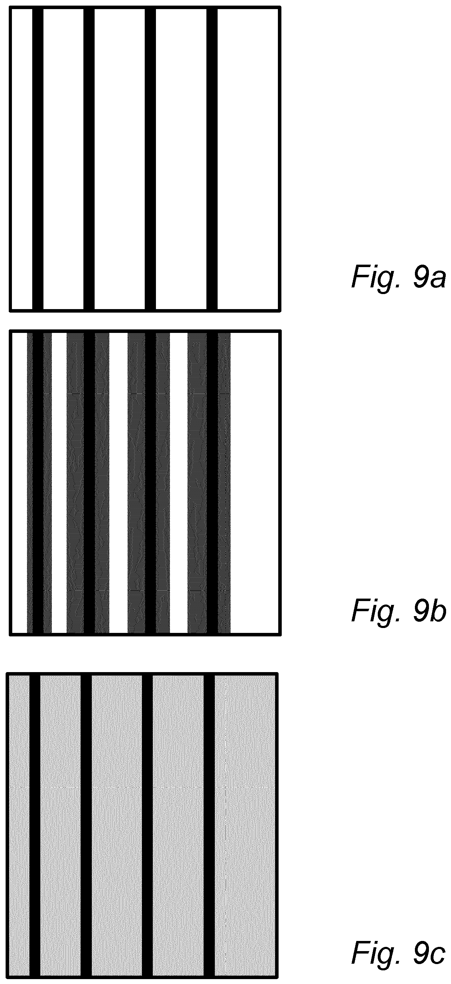

**Figure 9a** schematically shows an example of an embodiment of a light modulator, in a top view. In figure 9a, no ink is shown and only part of the electrode lines of the one or more electrodes. **Figure 9b** schematically shows an example of an embodiment of a light modulator, without a structuring agent. In this light modulator, there is a tendency for pigment particles to move towards the electrode lines, forming a gradient. The result is a non-homogeneous distribution of gray shades. This is known as the curtain effect.

**Figure 9c** schematically shows an example of an embodiment of a light modulator using a structuring agent. In figure 9c, pigment particles at the electrode lines stay there due to the high-viscosity. At this point, no electric field is needed to maintain the distribution. With the electric field removed, the remaining pigment particles in the low-viscosity region between the electrodes are free to disperse there, leading to a homogeneous distribution of gray. Note that the width of the electrode lines has been exaggerated for effect in these figures.

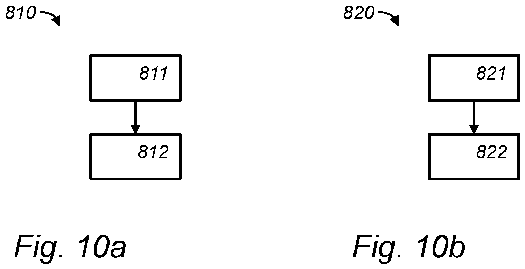

**Figure 10a** schematically shows an example of an embodiment of a light modulator method 810. The light modulator comprises: a first substrate and a second substrate, the first and second substrates being arranged with inner sides opposite to each other, at least one electrode being applied to the inner side of the first substrate; an optical layer between the first and second substrates, the optical layer comprising: a fluid ink comprising pigment particles and a structuring agent, wherein the pigment particles are electrically charged or chargeable. Method 810 comprises
- applying (811) an electric potential to the at least one electrode, thereby generating an electric field in the optical layer and providing electrophoretic or dielectrophoretic movement of the pigment particles, causing modulation of optical properties of the light modulator,
- structuring (812) the ink through the structuring agent in at least part of the optical layer and at least when the optical layer is in a particular optical state.

Although not shown in figure 10a, method 810 may comprise additional parts. For example, method 800 may further comprise
- structuring the entire optical layer when the optical layer reaches a stable optical state, and/or
- increasing the viscosity in the electrode volume when the optical layer reaches a stable optical state compared to outside the electrode volume, and/or
- reducing the viscosity of the optical layer during the electrophoretic or dielectrophoretic movement of the pigment particles.

**Figure 10b** schematically shows an example of an embodiment of a method 820 for manufacturing a light modulator. Method 820 comprises
- arranging (821) a first substrate and a second substrate with inner sides opposite to each other, at least one electrode being applied to the inner side of the first substrate,
- applying (822) an optical layer between the first and second substrates, the optical layer comprising a fluid ink including pigment particles and a structuring agent, wherein the pigment particles are electrically charged or chargeable,
- wherein the at least one electrode is configured, upon application of an electric potential, to generate an electric field in the optical layer providing electrophoretic or dielectrophoretic movement of the pigment particles causing modulation of optical properties of the light modulator,
- wherein the structuring agent limits the diffusion of the pigment particles of the ink in at least part of the optical layer and at least when the optical layer is in a particular optical state.

Method 820 may comprise additional parts. For example, method 820 may further comprise
- cross-linking a polymer by exposure to UV light, and/or
- cross-linking a polymer by increasing a temperature of a volume of the optical layer.

In an embodiment, method 820 may further comprise
- selectively breaking the cross-linked volume by exposing specific parts of the cross-linked volume to UV light, using the electrodes to mask UV light.

For example, in an area at the electrodes, e.g., the electrode volume, a high-viscosity area may be created by cross-linking. Outside the electrode volume, the viscosity may be reduced, e.g., reduced compared to the electrode volume.

It will be appreciated that the presently disclosed subject matter also extends to computer programs, particularly computer programs on or in a carrier, adapted for putting the presently disclosed subject matter into practice. The program may be in the form of source code, object code, a code intermediate between source and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Control of the light modulator may comprise computer program. Such computer program may be stored on a computer-readable medium. The computer program may be embodied on the computer-readable medium as physical marks or by magnetization of the computer-readable medium, etc. Any other suitable embodiment is conceivable as well. The computer-readable medium may be any suitable computer-readable medium, such as a hard disk, solid-state memory, flash memory, etc., and may be non-recordable or recordable. A controller for a light modulator may comprise a computer, e.g., configured to execute the computer program. The controller may comprise a memory for storing programming code, data, etc., and a processor configured to execute the programming code. The controller may be connected or connectable to the light modulator.

The controller may be configured for computerized control of the light modulator. For example, control of one or more of: electric potentials on the electrodes in the light modulator to generate electric fields for particle movement, generating magnetic fields for moving magnetic particles, measuring current in the optical layer and determining viscosity based on that measurement, modifying the driving and/or viscosity of the light modulator in response said determination

During manufacture, computerized control may be used, e.g., for increasing temperature in specific volumes of the optical layer for polymer cross-linking, UV light for polymer cross-linking, or selective breaking of cross-linked volumes

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims, references in parentheses refer to reference signs in drawings of exemplifying embodiments or to formulas of embodiments, thus increasing the intelligibility of the claim. These references shall not be construed as limiting the claim.

## Claims

1. A light modulator comprising:
- a first substrate and a second substrate, the first and second substrates being arranged with inner sides opposite to each other, at least one electrode being applied to the inner side of the first substrate,
- an optical layer between the first and second substrates, the optical layer comprising:
- a fluid ink comprising pigment particles and a structuring agent, wherein the pigment particles are electrically charged or chargeable;
- wherein the at least one electrode is configured, upon application of an electric potential, to generate an electric field in the optical layer providing electrophoretic or dielectrophoretic movement of the pigment particles causing modulation of optical properties of the light modulator,
- wherein the structuring agent limits the diffusion of the pigment particles in the ink in at least part of the optical layer and at least when the optical layer is in a particular optical state.

2. A light modulator as in Claim 1, wherein the structuring agent comprises a gelling agent, a thickening agent, and/or a rheology modifier.

3. A light modulator as in any one of the preceding claims, wherein the diffusion of the pigment particles is reduced in a first region of the optical layer compared to a second region of the optical layer.

4. A light modulator as in any one of the preceding claims, wherein the structuring agent causes a local increase in viscosity in parts of the optical layer where a local concentration of the structuring agent exceeds a threshold.

5. A light modulator as in any one of the preceding claims, wherein the at least one electrode is configured to concentrate the structuring agent in regions of the optical layer, increasing viscosity of said regions, to control diffusion of pigment particles in the optical layer.

6. A light modulator as in any one of the preceding claims, wherein the at least one electrode comprises multiple electrode lines arranged in a pattern across the substrate, wherein viscosity of the ink is increased by the structuring agent adjacent to the multiple electrode lines, compared to regions between the multiple electrode lines.

7. A light modulator as in any one of the preceding claims, wherein at least a first electrode and a second electrode are applied to the inner side of the first substrate, and at least a first electrode and a second electrode are applied to the inner side of the second substrate, the first electrode and the second electrode of the first substrate each comprise multiple electrode lines arranged in a pattern across the first substrate, the multiple electrodes of the first electrode and second electrode being interdigitated, the first electrode and the second electrode of the second substrate each comprise multiple electrode lines opposite the multiple electrode lines on the first substrate.

8. A light modulator as in Claim 7, wherein:
- the structuring agent is concentrated in a first volume between opposite electrode lines on opposite substrates, and at least part of the pigment particles are moved to the first volume,
- the local concentration of the structuring agent in the first volume is above a threshold, which leads to increased viscosity in the ink locally, thereby reducing diffusion of the pigment particles out of the first volume.

9. A light modulator as in any one of claims 7-8, wherein:
- the structuring agent is concentrated in a first volume between opposite electrode lines on opposite substrates, and at least part of the pigment particles are moved to a second volume between electrode lines on the same substrate,
- the local concentration of the structuring agent in the second volume is above a threshold, which leads to increased viscosity in the ink locally, thereby reducing diffusion of the pigment particles out of the second volume.

10. A light modulator as in any one of claims 7-9, wherein:
- the local concentration of the structuring agent in the second volume between electrode lines on the same substrate is below a threshold, leading to lower viscosity in the ink in the second volume compared to the first volume.

11. A light modulator as in any one of claims 7-10 wherein:
- once the increased viscosity is formed, the electric field is reduced or stopped on the electrodes on the first and second substrate, the structuring agent continuing to reduce diffusion out of the first volume and/or second volume.

12. A light modulator as in any one of the preceding claims, wherein:
- an electric or magnetic field is applied between electrodes of opposite substrates, moving pigment particles and/or the structuring agent therein, breaking a local structure of the structuring agent in the liquid, wherein the local concentration of the structuring agent in the first volume remains above a threshold, which leads to increased viscosity of the ink locally once the electric or magnetic field ceases.

13. A light modulator as in any one of the preceding claims, wherein the light modulator is configured to measure a current in the optical layer and determine therefrom a viscosity of the ink by the structuring agent in at least part of the optical layer, wherein the driving and/or viscosity of the light modulator is modified in response to the determining.

14. A light modulator as in any one of the preceding claims, wherein in a stable optical state, at 20 degrees, the ink in the part of the optical layer with limited diffusion has
- a viscosity of at least 100 mPa.s, or at least 200 mPa.s, or at least 500 mPa.s, or at least 1000 mPa.s, and/or
- a viscosity of at most 1000 mPa.s, or at most 5000 mPa.s, or at most 10000 mPa. s.

15. A light modulator as in any one of the preceding claims, wherein during modulation of the optical properties of the light modulator, at 20 degrees Celsius room temperature, the ink in the part of the optical layer with limited diffusion has
- a viscosity of at least 1 mPa.s, or at least 10 mPa.s, or at least 20 mPa.s, or at least 50 mPa.s, and/or
- a viscosity of at most 50 mPa.s, or at most 80 mPa.s, or at most 100 mPa.s

16. A light modulator as in any one of the preceding claims, wherein, in the absence of an electric field, the structuring agent increases the resistance to movement of the pigment particles within the ink, thereby limiting their diffusion in the optical layer, and wherein the application of an electric field generated by the at least one electrode reduces the resistance, thus increasing diffusion of the pigment particles in the optical layer.

17. A light modulator as in any one of the preceding claims, wherein the particle pigments' motion induced by the electrical fields modulates the viscosity of the ink.

18. A light modulator as in any one of the preceding claims, wherein the ink comprising the structuring agent exhibits shear-thinning behavior, such that, in the absence of movement of the pigment particles induced the at least one electrode, the ink has a higher viscosity, and wherein, when said movement is induced, the viscosity decreases due to shear.

19. A light modulator as in any one of the preceding claims, wherein the structuring agent comprises electrically charged or chargeable structuring particles, e.g., polymers and/or molecules, the generated electric field in the optical layer providing electrophoretic or dielectrophoretic movement of the structuring particles together with the movement of the pigment particles.

20. A light modulator as in any one of the preceding claims, wherein the structuring agent comprises magnetic particles, the light modulator being configured to generate a magnetic field in the optical layer providing movement of the structuring agent causing modulation of viscosity in the optical layer.

21. A light modulator as in any one of the preceding claims, wherein the electric field in the optical layer further provides movement of the structuring agent.

22. A light modulator as in Claim 21, wherein movement of the structuring agent is at least 2 times as slow as that of the pigment particles, or at least 10 times as slow as that of the pigment particles.

23. A light modulator as in Claim 21 or 22, wherein movement of the structuring agent is induced by one of magnetic, electrophoretic, or dielectrophoretic forces, and wherein movement of the pigment particles is induced by a different one of magnetic, electrophoretic, or dielectrophoretic forces.

24. A light modulator as in any one of the preceding claims, wherein the movement of the structuring agent is induced by a dielectrophoretic force and the movement of the pigment particles is induced by an electrophoretic force, the dielectrophoretic force and the electrophoretic force being generated by the same electrode of the at least one electrode.

25. A light modulator as in Claim 23 or 24, wherein the dielectrophoretic force is generated by an AC signal on the electrode of at least 1kHz, and the electrophoretic force is generated by a DC signal or an AC signal below 1kHz or below 100 Hz.

26. A light modulator as in any one of the preceding claims, wherein the light modulator is configured to periodically apply an electric field between an electrode on the first substrate and an electrode on the second substrate to move charged pigment particles and/or charged structuring agent to a region between the electrodes.

27. A light modulator as in any one of the preceding claims, wherein at least a first electrode and a second electrode are applied to the inner side of the second substrate, said first electrode and the second electrode each comprise multiple electrode lines arranged in a pattern across the second substrate, the multiple electrodes of the first electrode and second electrode being interdigitated, wherein the light modulator has a first optical state and a second optical state, e.g., a transparent state and a non-transparent state, the light modulator being configured to
- switch to the second optical state by creating an alternating voltage on at least one of the first and second substrates, applying an alternating current between at least a first electrode and a second electrode on the first substrate and/or between a first electrode and a second electrode on the second substrate,
- switch to the first optical state by creating an alternating voltage between the first and second substrate, applying an alternating current between a first electrode on the first substrate and a first electrode on the second substrate, and/or between a second electrode on the first substrate and a second electrode on the second substrate.

28. A light modulator as in any one of the preceding claims,
- wherein viscosity is reduced during switching to the second optical state, and/or
- wherein viscosity is increased after switching to the first optical state.

29. A light modulator as in any one of the preceding claims, wherein the structuring agent comprises a gelling agent, the gelling agent structuring the ink by gelling the ink.

30. A light modulator as in any one of the preceding claims, wherein the structuring agent gels the optical layer when the optical layer is in a stable optical state, but reduces gelling during electrophoretic or dielectrophoretic movement of the pigment particles.

31. A light modulator as in any one of the preceding claims, wherein the structuring agent comprises a gelling agent, and wherein the gelling agent has a shear-thinning property.

32. A light modulator as in any one of the preceding claims, wherein the structuring agent comprises a polymer or copolymer,
- having at least one charged or chargeable monomer, and/or
- a molecular weight of at least 1 × 10³ Daltons,
- a molecular weight of at most 5 × 10⁷ Daltons.

33. The light modulator according to any one of the preceding claims, wherein:
- the structuring agent forms a solvophobic domain within the structured ink, the solvophobic domain comprising one or more of: styrenics, low alkyl (meth)acrylates, ethylene, carbonates, polyesters, polyamides, polyurethanes; and/or
- the ink comprises one or more chemically cross-linkable domains selected from: free-radical cross-linking with vinyl or acrylic, Michael addition with amine and carbonyl complements, click chemistry, alcohol and isocyanate complements, amine and isocyanate complements.

34. The light modulator according to any one of the preceding claims, wherein the structuring agent comprises
- polyethylene oxide (PEO), e.g., in a concentration of at least 1% w/v, and at most 5% w/v, and/or
- xanthan gum, e.g., in a concentration of at least 0.1% w/v and at most 2% w/v.

35. The light modulator according to any one of the preceding claims, wherein the structuring agent forms a space-filling domain within the optical layer, the space-filling domain filling at least part of the space between the electrodes, while allowing the movement of pigment particles in and out of the space-filling domain, wherein optionally, the structuring agent comprises swollen polymer microgels and/or dendrimers.

36. The light modulator according to any one of the preceding claims, wherein the structuring agent comprises one or more of:
- ionic polymers,
- Acrylate-Based Polymers, Acrylate-Based Polymers configured to carry electrical charges, e.g., Acrylate-Based Polymers wherein the polymer chains include one or more ionic groups,
- Conductive Polymers, e.g., polypyrrole, polythiophene, e.g., polymers made conductive by doping with ions.

37. Dynamic glazing comprising a light modulator as in any of the preceding claims.

38. A method (810) for a light modulator, the light modulator comprising: a first substrate and a second substrate, the first and second substrates being arranged with inner sides opposite to each other, at least one electrode being applied to the inner side of the first substrate; an optical layer between the first and second substrates, the optical layer comprising: a fluid ink comprising pigment particles and a structuring agent, wherein the pigment particles are electrically charged or chargeable; the method comprising
- applying (811) an electric potential to the at least one electrode, thereby generating an electric field in the optical layer and providing electrophoretic or dielectrophoretic movement of the pigment particles causing modulation of optical properties of the light modulator,
- structuring (812) the ink through the structuring agent in at least part of the optical layer and at least when the optical layer is in a particular optical state.

39. A method as in Claim 38, the method further comprising:
- structuring the entire optical layer when the optical layer reaches a stable optical state, and/or
- increasing the viscosity in the electrode volume when the optical layer reaches a stable optical state compared to outside the electrode volume, and/or
- reducing the viscosity of the optical layer during the electrophoretic or dielectrophoretic movement of the pigment particles.

40. A method (820) for manufacturing a light modulator comprising:
- arranging (821) a first substrate and a second substrate with inner sides opposite to each other, at least one electrode being applied to the inner side of the first substrate,
- applying (822) an optical layer between the first and second substrates, the optical layer comprising a fluid ink including pigment particles and a structuring agent, wherein the pigment particles are electrically charged or chargeable,
- wherein the at least one electrode is configured, upon application of an electric potential, to generate an electric field in the optical layer providing electrophoretic or dielectrophoretic movement of the pigment particles causing modulation of optical properties of the light modulator,
- wherein the structuring agent limits the diffusion of the pigment particles of the ink in at least part of the optical layer and at least when the optical layer is in a particular optical state.

41. A method for manufacturing a light modulator as in Claim 40, comprising
- creating the structuring agent within the optical layer by cross-linking a polymer by exposure to UV light.

42. A method for manufacturing a light modulator as in Claim 40, comprising
- cross linking a polymer by increasing a temperature of a volume of the optical layer,
- selectively breaking the cross-linked volume by exposing specific parts of the cross-linked volume to UV light, using the electrodes to mask UV light.
